(19) Europäisches Patentamt
European Patent Office
Office européen des brevets

(11) **EP 4 023 380 A1**

(12) **EUROPÄISCHE PATENTANMELDUNG**

(43) Veröffentlichungstag:
**06.07.2022 Patentblatt 2022/27**

(21) Anmeldenummer: **21211859.0**

(22) Anmeldetag: **02.12.2021**

(51) Internationale Patentklassifikation (IPC):
**B23K 9/02** (2006.01)  **B23K 9/095** (2006.01)
**B23K 9/12** (2006.01)  **B23K 9/127** (2006.01)
**B23K 9/173** (2006.01)

(52) Gemeinsame Patentklassifikation (CPC):
**B23K 9/0216; B23K 9/095; B23K 9/126;**
**B23K 9/127; B23K 9/173**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.12.2020 DE 102020135092**

(71) Anmelder: **Carl Cloos Schweißtechnik Gesellschaft mit beschränkter Haftung**
**35708 Haiger (DE)**

(72) Erfinder:
• **Güclü, Ilyas**
**35683 Dillenburg (DE)**
• **Pittner, Stephan**
**35767 Breitscheid (DE)**
• **Paul, Christian**
**35686 Dillenburg-Donsbach (DE)**

(74) Vertreter: **Lippert Stachow Patentanwälte Rechtsanwälte Partnerschaft mbB**
**Postfach 30 02 08**
**51412 Bergisch Gladbach (DE)**

(54) **SCHWEISSVERFAHREN ZUM BETRIEB EINES SCHWEISSROBOTERS MIT SCHWEISSNAHTVERFOLGUNG**

(57) Die Erfindung betrifft ein Lichtbogen-Schweißverfahren zum Verbinden zumindest zweier Werkstücke, bei welchem ein Roboter einen Schweißbrenner entlang einer Bahnlinie mit überlagerter Pendelbewegung senkrecht zur Bahnlinie zur Ausführung einer vorgegebenen Schweißnaht führt und in Abhängigkeit von zumindest einer zeitlich sich ändernden Zustandsgröße des Schweißlichtbogens wie Schweißstrom und/oder Schweißspannung während der Bewegung des Schweißbrenners Nahtverfolgungssignale erzeugt werden, aus welchen zur Nachführung der Position des Schweißbrenners in Bezug auf die vorgegebene Schweißnaht Seitenkorrektursignale und/oder Höhenkorrektursignale erzeugt werden, mit welchen die Bewegungsbahn des Schweißbrenners zur Erzeugung der Schweißnaht angepasst wird, wobei der Schweißbrenner einen Schweißprozess unter Einstellung einer Mehrzahl von Schweißparametern wie Drahtvorschubgeschwindigkeit, Schweißstrom, Schweißspannung und/oder Lichtbogenlänge ausführt. Das erfindungsgemäße Verfahren zeichnet sich dadurch aus, dass Nahtverfolgungssignale zum Zeitpunkt einer Pendelelongation zur Bahnlinie von etwa Null ausgewertet werden zur Ermittlung einer Zustandsspaltbreite zwischen den zu verschweißenden Werkstücken, wobei zumindest einer der Schweißparameter Drahtvorschubgeschwindigkeit, Lichtbogenlänge, Schweißspannung und/oder Schweiß-strom. (Fig. 3 a - g)

Fig. 3

**Beschreibung**

Die Erfindung betrifft ein Lichtbogen-Schweißverfahren zum Verbinden zumindest zweier Werkstücke, bei welchem ein Roboter einen Schweißbrenner entlang einer Bahnlinie mit überlagerter Pendelbewegung senkrecht zur Bahnlinie zur Ausführung einer vorgegebenen Schweißnaht führt und in Abhängigkeit von zumindest einer zeitlich sich ändernden Zustandsgröße des Schweißlichtbogens wie Schweißstrom oder Schweißspannung während der Bewegung des Schweißbrenners Nahtverfolgungssignale erzeugt werden, aus welchen zur Nachführung der Position des Schweißbrenners in Bezug auf die vorgegebene Schweißnaht Seitenkorrektursignale und/oder Höhenkorrektursignale erzeugt werden, mit welchen die Bewegung des Schweißbrenners zur Erzeugung der vorgegebenen Schweißnaht angepasst wird, wobei der Schweißbrenner einen Schweißprozess unter Einstellung einer Mehrzahl von Schweißparametern wie Drahtvorschubgeschwindigkeit, Schweißstrom, Schweißspannung und/oder Lichtbogenlänge ausführt. Die Erfindung betrifft ferner eine entsprechende Schweißanordnung zur Ausführung eines solchen Lichtbogenschweißverfahrens.

Bei dem angegebenen bekannten Lichtbogen-Schweißverfahren wird insofern der Schweißlichtbogen als Sensor verwendet, um durch Toleranzen und/oder durch Wärmeverzug beim Schweißvorgang verursachte Abweichungen an den Bauteilen und damit Abweichungen zu einer vorbestimmten Schweißnaht zu erfassen und den Brenner bei der Ausführung des Roboterschweißens nachzuführen. Ein solches herkömmliches Schweißverfahren zum automatischen und fortlaufenden Nachführen bzw. Regeln der Position eines Schweißbrenners ist beispielsweise in den Dokumenten US 4,785,155 und EP 1 268 110 B2 offenbart.

Bei dem im europäischen Patent EP 0 512 583 B1 beschriebenen Verfahren zum Ausführen eines Pendelschweißverfahrens mit einem Schweißroboter wird darüber hinaus gelehrt, die Pendelamplitude als auch die Schweißgeschwindigkeit, d.h. die Bewegungsgeschwindigkeit des Schweißbrenners bzw. des Roboters, an die erfassten Nahtverfolgungssignale anzupassen, um das Schweißergebnis zu verbessern.

Ferner ist auf dem Gebiet des gattungsgemäßen automatischen Roboterschweißens bekannt, entweder zusätzlich zu dem beschriebenen Lichtbogensensor oder stattdessen Signale eines weiteren bzw. anderen Sensors wie eines Lasersensors zur Erfassung der jeweiligen realen Fugengeometrie der zu verschweißenden Werkstücke fortlaufend beim Schweißvorgang aufzunehmen und in Abhängigkeit der Sensorsignale kontinuierlich die Position des Schweißbrenners nachzuführen und neben diesen Bewegungsparametern des Schweißbrenners bzw. Roboters auch Schweißparameter wie insbesondere die Drahtvorschubgeschwindigkeit an die erfasste Fugengeometrie anzupassen, um eine optimale Verschweißung der beiden Werkstücke im Wesentlichen unabhängig von etwaigen Toleranzen und/oder von etwaigem Wärmeverzug an den Werkstücken zu ermöglichen. Mit dem Einsatz eines solchen zusätzlichen Sensors kann der Schweißprozess flexibel auch an Veränderungen der Spaltbreite zwischen den Werkstücken angepasst und insbesondere einer sich verändernden Spaltbreite durch Anpassung der Schweißparameter des Schweißbrenners entgegengewirkt werden.

Die Verwendung eines Lasersensors zur kontinuierlichen Erfassung der Fugengeometrie bei der Durchführung des Schweißverfahrens ist jedoch sehr kostenintensiv. Insofern liegt der vorliegenden Erfindung die Aufgabe zugrunde, das beschriebene gattungsgemäße Lichtbogen-Schweißverfahren so weiterzubilden, dass kostengünstig auch durch erhöhte Toleranzen der Bauteile bzw. erhöhten Verzug der Bauteile während der Durchführung des Schweißverfahrens verursachte Veränderungen der Fugengeometrie erfasst werden und das Schweißverfahren daran angepasst wird, um eine verbesserte Schweißnaht zum Verschweißen der Werkstücke zu erzeugen.

Diese Aufgabe wird verfahrensseitig mit einem Lichtbogen-Schweißverfahren mit den Merkmalen von Anspruch 1 gelöst. Bei dem erfindungsgemäßen Lichtbogen-Schweißverfahren, das insbesondere als Lichtbogen-Schweißverfahren mit abschmelzender Elektrode ausgebildet sein kann, wird durch einen Roboter ein Schweißbrenner entlang einer Bahnlinie mit überlagerter Pendelbewegung senkrecht zur Bahnlinie zur Ausführung einer vorgegebenen Schweißnaht geführt und werden in Abhängigkeit von zumindest einer zeitlich sich ändernden Zustandsgröße des Schweißlichtbogens wie Schweißstrom und/oder Schweißspannung während der Bewegung des Schweißbrenners Nahtverfolgungssignale erzeugt, aus welchen zur Nachführung der Position des Schweißbrenners in Bezug auf die vorgegebene Schweißnaht Seitenkorrektursignale und/oder Höhenkorrektursignale erzeugt werden, mit welchen die Bewegungsbahn des Schweißbrenners zur Erzeugung der Schweißnaht angepasst wird, wobei der Schweißbrenner einen Schweißprozess unter Einstellung einer Mehrzahl von Schweißparametern wie Drahtvorschubgeschwindigkeit, Schweißstrom, Schweißspannung und/oder Lichtbogenlänge ausführt. Bei der Ausführung eines Impulsschweißprozesses können als weitere Schweißparameter die Pulsdauer und die Pulsfrequenz umfasst sein bzw. eingestellt werden. Das erfindungsgemäße Schweißverfahren zeichnet sich dadurch aus, dass Nahtverfolgungssignale zum Zeitpunkt einer Pendelelongation zur Bahnlinie von etwa Null, insbesondere von Null, ausgewertet werden zur Ermittlung einer Zustandsspaltbreite zwischen den zu verschweißenden Werkstücken, wobei zumindest einer der Schweißparameter Drahtvorschubgeschwindigkeit, Lichtbogenlänge, Schweißspannung, Schweißstrom, Pulsdauer und Pulsfrequenz in Abhängigkeit der ermittelten Zustandsspaltbreite angepasst wird.

Dem erfindungsgemäßen Lichtbogen-Schweißverfahren liegt die grundsätzliche Idee zugrunde, die bei herkömmlichen Schweißverfahren unter Verwendung eines Lichtbogensensors ermittelten Nahtverfolgungssignale, in Abhängigkeit derer der Brenner robotergesteuert seitlich und/oder in Bezug auf seine Höhe zur auszubildenden Schweißnaht nachgeführt wird, darüber hinaus zu nutzen, um bei der Durchführung des Schweißverfahrens, u.U. kontinuierlich, eine jeweilige Ist-Spaltbreite zwischen den Werkstücken am Ist-Ort des Schweißbrenners zu ermitteln und daraus zumindest einen Schweißparameter aus der Gruppe von Schweißparametern Drahtvorschubgeschwindigkeit, Lichtbogenlänge, Schweißspannung, Schweißstrom, und, soweit ein Impulsschweißprozess ausgeführt wird, u.U. Pulsdauer und Pulsfrequenz anzupassen, sodass das Schweißverfahren während des Schweißvorganges z.B. kontinuierlich oder beim Überschreiten einer vorgegebenen Spaltbreite bzw. Spaltbreitenänderung ausgehend von einem Referenzwert sprunghaft an die jeweils ermittelte Ist-Spaltbreite (Zustandsspaltbreite) angepasst, d.h. adaptiert werden kann. Wird beispielsweise eine vergrößerte Spaltbreite erkannt, kann nach dem erfindungsgemäßen Verfahren die Drahtvorschubgeschwindigkeit und die Brennergeschwindigkeit erniedrigt werden, um einen Durchbrand im Schweißbett zu vermeiden und um mehr Material im vergrößerten Spaltbereich abzulagern, unter Umständen unter gleichzeitiger Erniedrigung des Schweißstromes bzw. Anpassung der Schweißparameter Schweißstrom und/oder Schweißspannung. Eine Ermittlung der Zustandsspaltbreite aus dem bzw. den jeweiligen Nahtverfolgungssignalen kann dabei von den spezifischen Nahtverfolgungssignalen abhängen, die wiederum von dem jeweiligen spezifischen Schweißprozess, wie z.B. einem Impulslichtbogenschweißprozess oder einem Kurzlichtbogenschweißprozess abhängen können.

Die Angabe "Bahnlinie" meint dabei insbesondere eine für den Schweißbrenner in Bezug auf einen vorgegebenen Referenzpunkt, beispielsweise die Öffnung des Kontaktrohrs am Schweißbrenner oder die Elektrode, vorgesehene Bewegungslinie des Schweißbrenners zur Gestaltung der vorgegebenen Schweißnaht. Die angegebene Nachführung der Position des Schweißbrenners bzw. dieses Regerenzpunktes und damit die Anpassung der Bahnlinie erfolgt zur Kompensation der beschriebenen Toleranzen bzw. zur Kompensation eines möglichen Verzugs der Werkstücke aufgrund eines erhöhten Wärmeeintrags bei deren Verschweißung.

Je nach Ausbildung der Erfindung kann die Anpassung des zumindest einen Schweißparameters an die erfasste Zustandsspaltbreite bzw. Zustandsspaltbreitenänderung gesteuert oder geregelt werden. Die Zustandsbreitenänderung kann sich dabei auf einen vorgegebenen Referenzwert einer Spaltbreite, insbesondere einen Spaltbreitenreferenzwert von Null beziehen, d.h. beispielweise liegen an dem Referenzort die zu verschweißende Bauteile auf Kontakt aneinander, d.h. die Schweißfuge ist in diesem Bereich spaltfrei.

Weitere erfindungsgemäße Merkmale und Weiterbildungen der Erfindung sind in der nachfolgenden allgemeinen Beschreibung, den Figuren, der Figurenbeschreibung sowie den Unteransprüchen angegeben.

Zur weiteren Optimierung des erfindungsgemäßen Schweißverfahrens kann vorgesehen sein, dass neben der Anpassung zumindest eines Schweißparameters der Schweißstromquelle auch zumindest ein Bewegungsparameter des Schweißbrenners bzw. des den Schweißbrenner bewegenden Roboters, insbesondere die Schweißgeschwindigkeit, der Höhensollwert, die Pendelbreite und/oder die Pendelfrequenz zur Erzeugung der Schweißnaht angepasst wird. Beispielsweise kann je nach spezifischem Schweißprozess vorgesehen sein, beim Erkennen einer vergrößerten Ist-Spaltbreite zum einen die Pendelbreite an die erfasste Spaltbreite anzupassen, d.h. zu vergrößern, unter Umständen auch Geschwindigkeit in Bezug auf die lineare Bewegung des Schweißbrenners entlang der Bewegungslinie zu vermindern, um am aktuellen Schweißort die vergrößerte Lücke bzw. den Spalt zwischen den Werkstücken zu schließen. Je nach Ausführungsform kann beispielsweise vorgesehen sein, gleichzeitig mit den Bewegungsparameters Pendelbreite sowie Schweißgeschwindigkeit auch den Schweißparameter Drahtvorschubgeschwindigkeit zu verringern, um ein Durchfallen bzw. Durchbrennen des Schweißbades von flüssigem Metall an dieser Stelle zu vermeiden. Vorzugsweise kann in dieser Ausführungsform vorgesehen sein, dass zumindest ein weiterer Schweißparameter, insbesondere Schweißstrom und/oder Schweißspannung an die geänderte Drahtvorschubgeschwindigkeit angepasst wird.

Wie der Fachmann erkennt, kann mit dem erfindungsgemäßen Verfahren durch das Erfassen der Zustandsspaltbreite bzw. einer Zustandsbreitenänderung bezogen auf einen vorgegebenen Spaltbreitenreferenzwert das jeweilige Schweißverfahren in Bezug auf die Bewegungsparameter des Schweißbrenners/Roboters als auch in Bezug auf die Schweißparameter optimal an die erkannte Fugengeometrie und/oder Materialerfordernisse der Werkstücke angepasst werden, um im Vergleich zum herkömmlichen Verfahren ein verbessertes Schweißergebnis zu erzeugen.

Zweckmäßigerweise kann vorgesehen sein, dass Nahtverfolgungssignale bei einem zumindest phasenweise spannungsgeregelten Schweißprozess in Abhängigkeit eines in der spannungsgeregelten Schweißphase erfassten Schweißstromes und/oder Nahtverfolgungssignale bei einem zumindest phasenweise stromgeregelten Schweißprozess in Abhängigkeit einer in der stromgeregelten Schweißphase erfassten Schweißspannung zu ermitteln. Diese Ermittlung kann beispielsweise eine Filterung der erfassten Zustandswerte des Lichtbogensensors und/oder eine weitere Bearbeitung umfassen, wie eine Multiplikation mit einem Verstärkungsfaktor und/oder eine Subtraktion eines Offsets. Allgemein kann die Ermittlung der jeweiligen Nahtverfolgungssignale in Abhängigkeit des jeweils umgesetzten Schweißprozesses so erfolgen, dass bei einer Änderung der Lichtbogenlänge, die in der Regel dem Abstand Werkstück-Schweißelektrode bzw. Werkstück- Kontaktrohr des Brenners entsprechen kann, sich das Nahtverfolgungssignal entsprechend ändert. Vorzugsweise kann das Nahtverfolgungssignal so eingestellt bzw. festgelegt werden, dass dieses einen Zustandswert eines Lichtbogenlängenäquivalents darstellt, mit dem die beschriebene Nachführung des Brenners zur Gestaltung der vorbestimmten Schweißnaht steuerbar bzw. regelbar ist.

Beispielsweise wird bei einem Stromimpuls-Schweißprozess periodisch zwischen einer stromgeregelten Grund- und einer spannungsgeregelten Impulsphase umgeschaltet, sodass die jeweilige Schweißenergiequelle in den beiden Phasen auf unterschiedliche elektrische Konstantwerte, die u.U. veränderbar sind, geregelt wird. Da der Nutzhub der Stromänderung in der spannungsgeregelten Impulsphase bezogen auf eine Abstandsänderung des Brenners zum Werkstück größer und damit messtechnisch besser zu erfassen ist, kann in einer Ausführungsform des erfindungsgemäßen Verfahrens bei Nutzung eines Stromimpuls-Schweißprozesses der Impulsstrom in der spannungsgeregelten Phase in einer Ausführungsform entweder direkt oder nach einer Verarbeitung wie obenstehend angegeben, insbesondere einer Filterung zur Ermittlung eines Nahtverfolgungssignal eingesetzt werden oder dieses gerade darstellen, sodass zumindest ein erfasster und unter Umständen aufbereiteter Strom-Ist-Wert in der Impulsphase des Schweißprozesses als Nahtverfolgungssignal genutzt werden kann. Es kann beispielsweise vorgesehen sein, nur den letzten Zeitabschnitt des jeweiligen Pulsintervalls, beispielsweise 20 - 30 % bezüglich der Abtastung des Schweißstromes zu berücksichtigen, um Einschwingvorgänge zu eliminieren. Dabei kann beispielsweise vorgesehen sein, bei solchen impulsbehafteten Schweißprozessen eine Stromabtastung verzögert auf das Taktsignal für den Stromimpuls zu steuern und insofern nach der Impulsauslösung verzögert den Strom abzutasten, wobei z.B. nach einer Tiefpassfilterung das Signal als Nahtverfolgungssignal zur beschriebenen Durchführung des erfindungsgemäßen Schweißverfahrens zur Verfügung gestellt werden kann.

Bei impulsfreien MSG(Metallschutzgas)-Schweißprozessen, die kurzschlussfrei arbeiten (im allgemeinen auch als Sprühlichtbogen-Schweißprozess bezeichnet) kann z.B. eine permanente Abtastung des Schweißstromes erfolgen, da bei diesen Schweißprozessen in der Regel weitgehendst mit konstanter geregelter Spannung gearbeitet wird, sodass keine Schweißprozessphasen-differenzierte Abtastung erfolgen muss, sondern unter Umständen eine über alle Phasen des jeweiligen Schweißprozesses abgetastete Lichtbogenzustandsgröße, beispielsweise der Schweißstrom, zur Ermittlung von Nahtverfolgungssignalen herangezogen werden kann. Bei kurzschlussbehafteten, impulsfreien MSG-Schweißprozessen kann beispielsweise eine Austastung der Schweißstromerfassung über die jeweilige Kurzschlussphase des Schweißprozesses durchgeführt werden.

Vorzugsweise kann vorgesehen sein, dass die beschriebene Erfassung der Nahtverfolgungssignale durch Messen zumindest einer Zustandsgröße des Lichtbogensensors und einer eventuellen analogen und/oder digitalen Verarbeitung der Signale durch eine Steuereinrichtung der Schweißstromquelle ermittelt werden und nachfolgend einer Robotersteuerung zur Einstellung der Bewegungsparameter übergeben wird, während eventuelle Änderungen der Schweißparameter i.d.R. durch die Steuereinrichtung der Schweißstromquelle angepasst werden können. In einer weiteren Ausführungsform kann auch vorgesehen sein, dass die Steuerung des erfindungsgemäßen Verfahrens in einer zentralen Steuereinrichtung durchgeführt wird, welche daten- und steuerungstechnisch mit der Schweißenergiequelle und dem Roboter verbunden sein ist und diese steuert bzw. regelt.

Zur Erfassung von Nahtverfolgungssignalen, auf der Grundlage dessen Seitenkorrektursignale und/oder Höhenkorrektursignale zur Anpassung der Bewegungslinie des Brenners erzeugt werden, kann zweckmäßigerweise, insbesondere in Fall eines Impulsstrom-Schweißprozesses vorgesehen sein, dass diese Nahtverfolgungssignale zum Zeitpunkt einer maximalen Pendelelongation zur Bewegungslinie erfasst werden. Demnach können die Nahtverfolgungssignale zu Zeitpunkten aufgenommen werden, bei welchen der Brenner relativ zur Bewegungslinie mit der Pendelamplitude ausgelenkt ist. Seiten- und Höhenkorrekturwerte können z.B. durch die Verarbeitung von Nahtverfolgungssignalen ermittelt werden, die sich bei einer Elongation mit der Pendelamplitude, d.h. bei maximaler Elongation ergeben. Ein Seitenkorrekturwert kann beispielsweise durch Mittelwertbildung von Nahtverfolgungssignalen ermittelt werden, die an zwei aufeinanderfolgenden Elongationen mit maximaler Auslenkung erfasst wurden, jedoch mit entgegengesetztem Vorzeichen, d.h. an zwei aufeinanderfolgenden Pendelumkehrpunkten.

Wie dargestellt, führt der Roboter den Schweißbrenner zusätzlich zur beschriebenen Bahnlinie zur Erzeugung der vorgegebenen Schweißnaht mit der angegebenen Pendelbewegung senkrecht zur Bahnlinie, insbesondere in Form einer sinusförmigen Auslenkung quer zur Schweißrichtung.

Insbesondere bei solchen Ausführungsformen, bei welchen das Nahtverfolgungssignal ausgebildet ist, ein Lichtbogenlängenäquivalent darzustellen, kann die gesuchte Ist- bzw. Zustandsspaltbreite bzw. deren Änderung proportional zum Lichtbogenlängenäquivalent bzw. zu dessen Änderung angesetzt werden.

Es kann vorgesehen sein, dass die Auswertung der Nahtverfolgungssignale zum Zeitpunkt einer Pendelelongation zur Bahnlinie von etwa Null bzw. Null eine Median- oder Mittelwertbildung aus einer vorgegebenen Anzahl von zeitlich aufeinanderfolgenden Nahtverfolgungssignalen zum Zeitpunkt einer Pendelelongation zur Bahnlinie von Null umfasst. Diese Mittel- oder Medianwertbildung kann insofern eine vorgegebene Anzahl von Nahtverfolgungssignalen umfassen, wobei diese Auswertung je nach Ausführungsform digital oder analog ausgeführt werden kann. Während im erstgenannten Fall eine Anzahl von digitalen Signalen innerhalb eines vorgegebenen Zeitfensters wie beschrieben verarbeitet werden, kann im zweiten Fall einer analogen Verarbeitung beispielsweise eine Integrationsschaltung Verwendung finden.

In einer zweckmäßigen Ausführungsform kann vorgesehen sein, dass eine Änderung der erfassten Zustandsspaltbreite über eine Strecke der Bahnlinie, insbesondere in der Art einer Änderungsrate erfasst und bei Überschreiten einer vorgegebenen Schwelle der Änderungsrate eine daran angepasste Änderung zumindest eines Schweißparameters des Schweißbrenners und/oder zumindest eines Bewegungsparameters des Schweißbrenners bzw. des Roboters gesteuert oder geregelt wird. Dabei kann auch vorgesehen sein, die Schweißgeschwindigkeit, d.h. die Bewegung des Schweißbrenners auf Null zu steuern, sodass der Schweißvorgang gestoppt wird. Es kann auch vorgesehen sein, das Schweißverfahren als solches weiterzuführen, jedoch unter Änderung bzw. Anpassung zumindest eines Schweißparameters und/oder eines Bewegungsparameters, wobei diese geänderten Parameter an den erfassten Zustandsspalt bzw. eine erfasste Zustandsspaltbreitenänderung angepasst wird. In einer zweckmäßigen Ausführungsform kann vorgesehen sein, dass bei Überschreiten einer vorgegebenen Schwelle einer erfassten Zustandsspaltbreite oder einer erfassten Zustandsbreitenänderung das Schweißverfahren mit einem vollständigen neuen Satz von Schweißparametern, insbesondere umfassend Drahtvorschubgeschwindigkeit, Lichtbogenlänge, Schweißparameter und Schweißstrom und/oder einem vollständigen neuen Satz von Bewegungsparameter, umfassend zumindest Schweißgeschwindigkeit, Höhensollwert, Pendelbreite und Pendelfrequenz gesteuert wird. Je nach durchgeführtem Schweißprozess, insbesondere bei einem Impulsschweißprozess kann als Schweißparameter auch eine Impulsdauer und/oder eine Pulsfrequenz umfasst sein.

Wie beschrieben, kann beim erfindungsgemäßen Schweißverfahren eine Anpassung bzw. Adaption von Schweißparameter und/oder Bewegungsparameter an eine ermittelte Zustandsspaltbreitenschwelle erfolgen. Zweckmäßigerweise kann auch vorgesehen sein, dass zumindest einer der genannten Schweißparameter und/oder zumindest einer der genannten Bewegungsparameter kontinuierlich an die ermittelte Zustandsspaltbreite bzw. Zustandsbreitenänderung angepasst wird, sodass eine dynamische Adaption des Schweißverfahrens an die erfasste Zustandsspaltbreite bereitgestellt werden kann.

Zweckmäßigerweise kann vorgesehen sein, dass nach dem Erfassen einer positiven Zustandsspaltbreitenänderung der Schweißparameter Drahtvorschubgeschwindigkeit und der Bewegungsparameter Schweißgeschwindigkeit erniedrigt und der Bewegungsparameter Pendelbreite erhöht werden. Mit diesen Anpassungen kann sichergestellt werden, dass das Schweißbett im sich vergrößernden Spalt nicht durchbricht und der Spalt vollständig geschlossen wird. Ferner kann vorgesehen sein, dass nach dem Erfassen einer negativen Zustandsspaltbreitenänderung der Schweißparameter Drahtvorschubgeschwindigkeit und der Bewegungsparameter Schweißgeschwindigkeit erhöht und der Bewegungsparameter Pendelbreite erniedrigt werden, wodurch die Schweißzeit zur Gestaltung der vorgegebenen Schweißnaht verringert werden kann.

Zur kontinuierlichen oder zur stufenweisen Anpassung kann bei der Ermittlung eines erhöhten Wertes eines jeweiligen Bewegungsparameters bzw. eines jeweiligen Schweißparameters ein vorgegebener, jeweiliger Basiswert des Bewegungsparameters bzw. des Schweißparameter multipliziert wird mit einem Quotienten, bei welchem der Dividend durch die Summe aus einem vorgegebenen Basiswert der Pendelbreite und der erfassten Zustandsspaltbreitenänderung und der Divisor durch den vorgegebenen Basiswert der Pendelbreite gebildet wird.

Insbesondere in solchen Fällen, bei welchen die Zustandsspaltbreite eine vergleichsweise geringe Variation bei der Erzeugung der vorgegebenen Schweißnaht aufweist, beispielsweise im Bereich von wenigen Millimeter liegt, kann zweckmäßigerweise vorgesehen sein, dass das erfindungsgemäße Schweißverfahren von einem Basissatz von Schweißparametern und Bewegungsparametern ausgeht, die im Folgenden als jeweilige Basiswerte der jeweiligen Parameter bezeichnet werden. Ausgehend von diesem Basiswert kann dann der jeweilige Parameter an die erfasste Zustandsspaltbreite bzw. Zustandsspaltbreitenänderungen angepasst werden. Zur kontinuierlichen oder zur stufenweisen Anpassung kann bei der Ermittlung eines erniedrigten Wertes eines jeweiligen Bewegungsparameters bzw. eines jeweiligen Schweißparameters ein vorgegebener, jeweiliger Basiswert des Bewegungsparameters bzw. des Schweißparameters multipliziert werden mit einem Quotienten, bei welchem der Dividend durch einen Basiswert der Pendelbreite und der Divisor durch eine Summe aus einem vorgegebenen Basiswert der Pendelbreite und der erfassten Zustandsspaltbreitenänderung gebildet wird.

Die beschriebene Anpassung oder Adaption des zumindest einen Schweißparameters bzw. des zumindest einen Bewegungsparameters kann wie beschrieben kontinuierlich, insbesondere in der Art einer Steuerung oder einer Regelung erfindungsgemäß durchgeführt werden.

In einer Ausführungsform des erfindungsgemäßen Schweißverfahrens kann vorgesehen sein, dass eine Anpassung des zumindest einen Schweißparameters an die ermittelte Zustandsspaltbreite bzw. eine ermittelte Zustandsspaltbreitenänderung sowie die beschriebene Höhenkorrektur der Bahnlinie des Schweißbrenners zueinander aufeinanderfolgend und fortlaufend durchgeführt wird werden. Diese Vorgehensweise ist insbesondere bei solchen Schweißprozessen bei der Durchführung des erfindungsgemäßen Schweißverfahrens zweckmäßig, bei welchen sich eine Höhenkorrektur der Bahnlinie auf die Ermittlung der Zustandsspaltbreite auswirkt, beispielsweise bei einem Nahtverfolgungssignal, das bei einem Impulsschweißprozess von der Höhe des Stromimpulses in einer spannungsgesteuerten Impulsphase abhängt.

Insbesondere in solchen Betriebssituationen, bei welchen die Spaltbreite während der Durchführung des Schweißverfahrens große Änderungen während der Erzeugung der vorgegebenen Schweißnaht unterworfen ist, beispielsweise im Bereich > 3 Millimeter liegt, kann zweckmäßigerweise vorgesehen sein, dass das erfindungsgemäße Schweißverfahren von einer Mehrzahl von Datensätzen ausgeht, die jeweils einen Basiswert des jeweiligen Parameters des jeweiligen Satzes umfasst und jeder der Datensätze einer jeweiligen Spaltbreite zugeordnet ist. Das erfindungsgemäße Verfahren kann in einer Weiterbildung des Verfahrens dabei so ausgebildet sein, dass zumindest zwei Sätze von Basiswerten von Schweißparametern mit jeweils zugeordneten Bewegungsparametern vorgegeben sind, die auf dem Gebiet häufig als Schweißlisten bezeichnet werden. Dabei kann der erste Satz von Basiswerten von Parametern einer ersten Spaltbreite und der zweite Satz von Basiswerten von Parametern einer zweiten Spaltbreite zugeordnet sein, wobei zu ermittelten, zwischen der ersten Spaltbreite und der zweiten Spaltbreite liegenden Zwischenwerten von Zustandsspaltbreiten jeweilige Korrekturwerte für zumindest einen Bewegungsparameter und/oder für zumindest einen Schweißparameter ermittelt bzw. berechnet werden. Diese Ermittlung bzw. Berechnung kann in Abhängigkeit einer Differenzbildung des Basiswerts des zweiten Satzes und des Basiswerts des ersten Satzes des jeweiligen Parameters, in Abhängigkeit einer Differenzbildung der Spaltbreite des zweiten Satzes und der Spaltbreite des ersten Satzes und in Abhängigkeit der ermittelten Zustandsspaltbreite durchgeführt werden.

Bei dieser Abwandlung unter Verwendung zweier Sätze von Basiswerten von Schweißparameter und zugehörigen Bewegungsparametern, die jeweils unterschiedlichen Spaltbreiten zwischen den zu verschweißenden Werkstücken zugeordnet sind, kann zur Berechnung eines Korrekturfaktors des jeweiligen Parameters ein Quotient aus der Differenz des Basiswerts des ersten Satzes und des Basiswerts des zweiten Satzes des jeweiligen Parameters und der Differenz der Spaltbreiten beider Sätze berechnet werden, wobei eine Berechnung des Korrekturwertes des jeweiligen Parameters eine Multiplikation des Korrekturfaktors des Parameters und der ermittelten Zustandsspaltbreite umfasst. Dabei kann die Anpassung des zumindest einen Parameters, d.h. Schweißparameters oder Bewegungsparameters, durch Addition des jeweiligen Basiswertes des ersten Satzes des Parameters mit dessen Korrekturwert ermittelt und das Schweißverfahren mit dem angepassten Wert des Parameters weitergeführt werden.

Die obige Aufgabe wird darüber hinaus vorrichtungsseitig durch eine Schweißanordnung zum Ausführen eines Lichtbogen-Schweißverfahrens, insbesondere eines Lichtbogen-Schweißverfahrens mit abschmelzender Elektrode, zum Verbinden zumindest zweier Werkstücke gelöst, umfassen ein Schweißsystem mit einer Schweißquelle und einem von einer Schweißsteuerung gesteuerten Schweißbrenner, sowie einem mittels einer Robotersteuerung gesteuerten Roboter, der den Schweißbrenner entlang einer Bahnlinie mit überlagerter Pendelbewegung senkrecht zur Bahnlinie zur Ausführung einer vorgegebenen Schweißnaht führt, wobei die Steuerungen eingerichtet und ausgebildet sind, in Abhängigkeit von zumindest einer zeitlich sich ändernden Zustandsgröße des Schweißlichtbogens wie Schweißstrom oder Schweißspannung während der Bewegung des Schweißbrenners Nahtverfolgungssignale zu erzeugen und daraus zur Nachführung der Position des Schweißbrenners in Bezug auf die vorgegebene Schweißnaht Seitenkorrektursignale und/oder Höhenkorrektursignale zu ermitteln, mit welchen die Bewegungsbahn bzw. Bewegungslinie des Schweißbrenners zur Erzeugung der Schweißnaht angepasst wird, wobei der Schweißbrenner einen Schweißprozess mit vorgegebenen Schweißparametern wie Drahtvorschubgeschwindigkeit, Schweißstrom, Schweißspannung und/oder Lichtbogenlänge ausführt. Die erfindungsgemäße Schweißanordnung zeichnet sich dadurch aus, dass diese ausgebildet und eingerichtet ist, Nahtverfolgungssignale zum Zeitpunkt einer Pendelelongation zur Bewegungslinie von Null zu erfassen zur Ermittlung einer Zustandsspaltbreite zwischen den zu verschweißenden Werkstücken und zumindest einer der Schweißparameter Drahtvorschubgeschwindigkeit, Lichtbogenlänge, Schweißspannung und Schweißstrom in Abhängigkeit der ermittelten Zustandsspaltbreite anzupassen, und das Schweißverfahren mit dem angepassten Wert des Schweißparameters weiterzuführen. Dabei kann diese Anpassung kontinuierlich oder stufenförmig, letzteres beispielsweise bei Erreichen eines vorgegebenen Schwellenwerts der Zustandsspaltbreite erfolgen, darüber hinaus auch im Rahmen einer Regelung. Je nach Ausführungsform kann bei der Ausführung eines Impulsschweißprozesses bei der Durchführung des erfindungsgemäßen Verfahrens auch eine Pulsdauer und/oder eine Pulsfrequenz als Schweißparameter an die erfasste Zustandsspaltbreite bzw. Zustandsspaltbreitenänderung angepasst werden.

Die Erfindung wird im Folgenden durch das Beschreiben einer Ausführungsform einer erfindungsgemäßen Schweißanordnung und des von dieser ausgeführten Schweißverfahrens erläutert, wobei

Figur 1     eine Prinzipdarstellung einer erfindungsgemäß ausgebildeten Schweißanordnung zur Umsetzung des erfindungsgemäßen Schweißverfahrens,

Figur 2     den bei der Umsetzung des erfindungsgemäßen Schweißverfahrens beispielhaft durchgeführten Impulsstromschweißprozess mit dem zeitlichen Verlauf von Schweißspannung, Schweißstrom und Drahtzufuhrgeschwindigkeit über mehrere Prozesszyklen,

Figur 3a     in einer Aufsicht einen beispielhaften Spaltverlauf zwischen zwei aneinandergelegten und zu verschweißenden Werkstücken in Abhängigkeit des Ortes x über die Länge 1 der Werkstücke,

Figur 3b     den Verlauf eines Nahtverfolgungssignals bei der Durchführung eines Schweißprozesses gemäß Figur 2 bei einer Pendelelongation von Null an den in Figur 3a gezeigten Werkstücken und in Bezug auf eine an die Länge des Spalts der Figur 3a angepasste xAchse,

Figur 3c    den Verlauf eines durch eine Filterung des Nahtverfolgungssignals der Fig. 3b erzeugten Signals in Bezug auf eine an die Länge des Spalts der Figur 3a angepasste x-Achse,

Figur 3d    die nach dem erfindungsgemäßen LichtbogenSchweißverfahren ermittelte Zustandsspaltbreite in Bezug auf eine an die Länge des Spalts der Figur 3a angepasste x-Achse,

Figur 3e    die Adaption bzw. Anpassung der Robotergeschwindigkeit an die ermittelte Zustandsspaltbreite in Bezug auf eine an die Länge des Spalts der Figur 3a angepasste x-Achse,

Figur 3f    die Adaption bzw. Anpassung der Drahtvorschubgeschwindigkeit an die ermittelte Zustandsspaltbreite in Bezug auf eine an die Länge des Spalts der Figur 3a angepasste x-Achse, und

Figur 3g    die Adaption bzw. Anpassung der Pendelbreite an die ermittelte Zustandsspaltbreite in Bezug auf eine an die Länge des Spalts der Figur 3a angepasste x-Achse

zeigt.

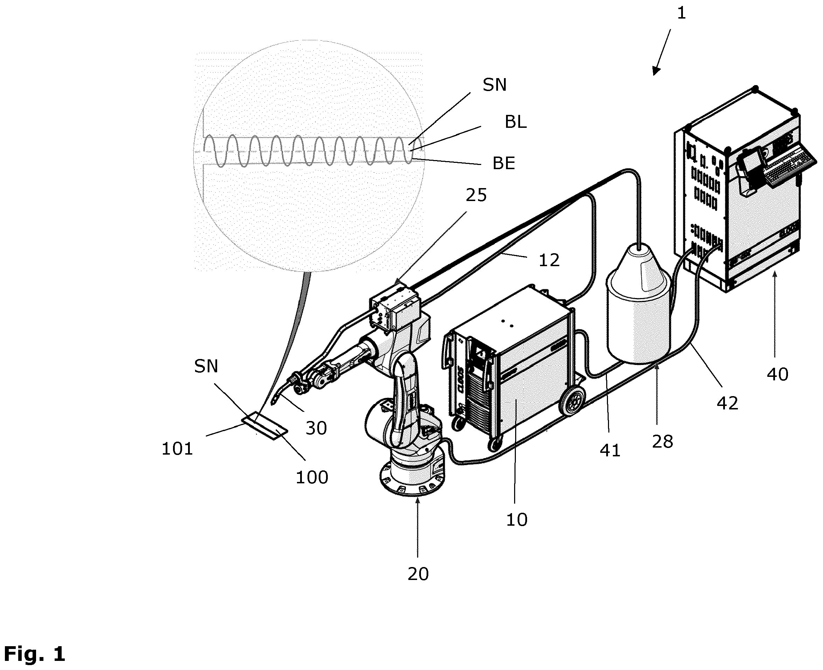

Figur 1 zeigt eine Schweißanordnung 1, die hier zur Umsetzung eines erfindungsgemäßen Lichtbogen-Schweißverfahrens ausgebildet ist, wobei die Anordnung eine Schweißstromquelle 10 umfasst, die mittels eines Schweißkabels 12 über eine Drahtantriebseinheit 25 mit einem von einem Roboter 20 geführten Schweißbrenner 30 verbunden ist. Die Schweißanordnung der Figur 1 ist zum Schweißen mit abschmelzender Elektrode ausgebildet, insofern umfasst die Schweißanordnung 1 darüber hinaus einen Drahtspeicher 28 sowie die hier am Roboter 20 befestigte Drahtantriebseinheit 25, welche den als Elektrode dienenden Schweißdraht aus dem Drahtspeicher 28 in den Schweißbrenner 30 transportiert. In der beschriebenen Ausführungsform ist eine in der Figur nicht dargestellte Kontakthülse elektrisch mit der Schweißstromquelle 10 verbunden, wobei der Schweißdraht im Brenner durch diese Kontakthülse geführt ist.

In der in Fig. 1 angegebenen Ausführungsform werden die Schweißstromquelle 10, der Roboter 20 und die Drahtantriebseinheit 25 durch eine zentrale Steuereinrichtung 40 gesteuert, welche die Steuerung bzw. Regelung der Bewegungsparameter des Roboters, Steuerung bzw. Regelung der Drahtantriebseinheit sowie die Steuerung bzw. Regelung der Schweißparameter der Schweißstromquelle ausführt. Hierzu ist die zentrale Steuereinrichtung über entsprechende Daten- und Steuerleitungen 41, 42 mit der Schweißstromquelle bzw. dem Roboter verbunden, wobei die zentrale Steuereinrichtung 40 steuerungstechnisch die Drahtantriebseinheit über die Schweißstromquelle führt bzw. ansteuert.

In einer nicht dargestellten Ausführungsform können der Roboter 20 und die Schweißstromquelle 10 auch getrennte Steuereinrichtungen aufweisen, die sowohl datentechnisch als auch steuerungstechnisch miteinander verbunden sind. Darüber hinaus kann auch vorgesehen sein, die zentrale Steuereinrichtung in der Schweißstromquelle 10 oder im Roboter 20 zu integrieren. Es sei betont, dass die in Figur 1 dargestellte Schweißanordnung zur Umsetzung des erfindungsgemäßen Verfahrens nur beispielhaft ist. Insbesondere kann das erfindungsgemäße Schweißverfahren auch im Rahmen der Durchführung eines schutzgasbehafteten Schweißprozesses in einer entsprechend ausgebildeten Schweißanordnung realisiert sein.

Figur 1 zeigt ferner zwei symbolhaft dargestellte Werkstücke 101, 100, die leicht beabstandet zueinander angeordnet sind und die mit der Schweißanordnung 1 im Bereich ihrer gegenseitigen, hier beabstandeten Lage verschweißt werden. Da derartige Werkstücke Herstellungstoleranzen aufweisen und sich beim Verschweißen verziehen können, sodass sich die gegenseitige Lage beim Schweißvorgang verändern kann, führt die Schweißanordnung 1 ein an sich bekanntes Schweißverfahren aus, bei welchem der Schweißbrenner 30 entlang einer Bahnlinie BL, insbesondere in Bezug auf das Kontaktrohr des Schweißbrenners 30 bzw. in Bezug auf die aus dem Kontaktrohr herausragende Elektrode, geführt wird zur Herstellung einer vorbestimmten Schweißnaht SN und gleichzeitig geführt wird in einer dieser Bahnlinie BL überlagerten und im Wesentlichen senkrecht zur Bahnlinie BL ausgerichteten Pendelbewegung, sodass sich die in der vergrößerten Darstellung des Nahtbereichs zwischen den Werkstücken 101, 100 der Fig. 1 angegebene reale Bewegungslinie BE ergibt. Der als Sensor verwendete und auf der beschriebenen Bewegungslinie BE bewegte Schweißlichtbogen tastet insofern die Schweißfuge ab und ermöglicht die Ableitung eines Nahtverfolgungssignals aus zumindest einer zeitlich sich ändernden Zustandsgröße des Schweißlichtbogens wie Schweißstrom und/oder Schweißspannung. Aus diesen Nahtverfolgungssignalen können wiederum Seitenkorrektursignale und/oder Höhenkorrektursignale zum Nachführen der Position des Schweißbrenners in Bezug auf die vorgegebene Schweißnaht erzeugt werden, sodass die oben beschriebene Geometrie- oder Materialänderungen der Werkstücke im Bereich der Schweißfuge erfasst und zumindest teilweise korrigiert werden können durch Anpassung von Bewegungsparametern bzw. der Bewegungsbahn des Schweißbrenners.

In der beschriebenen Ausführungsform führt die Schweißanordnung 1 einen Schweißimpulsprozess aus, bei welchem periodisch zwischen einer stromgeregelten Grund- und einer spannungsgeregelten Impulsphase umgeschaltet wird.

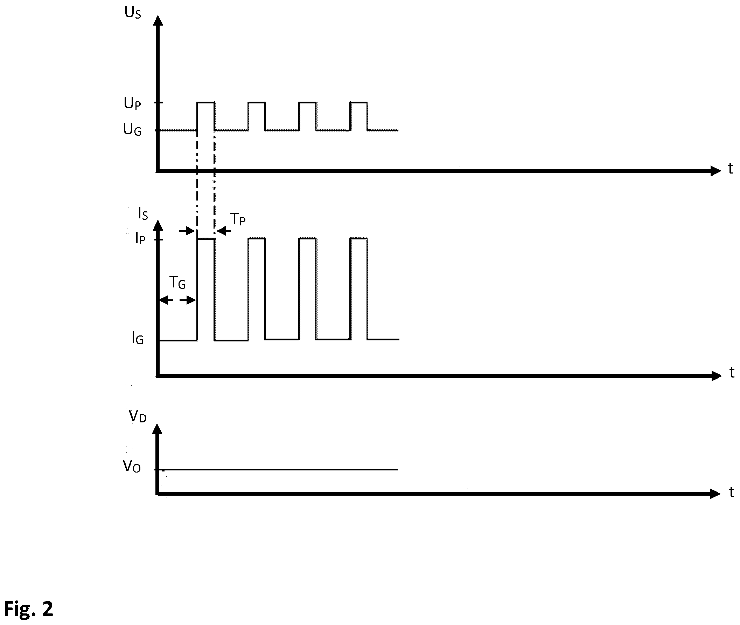

Figur 2 zeigt einen beispielhaften zeitlichen Verlauf der Schweißparameter Schweißspannung $U_S$, Schweißstrom $I_S$ und Drahtzuführgeschwindigkeit $V_D$ des Elektrodendrahtes. Ein einzelner Zyklus des Schweißprozesses umfasst eine auf den Grundstrom $I_G$ geregelte Grundstromphase in dem Zeitintervall $T_G$ und eine sich daran anschließende, auf eine Konstantspannung geregelte Pulsphase in dem Zeitintervall Tp, bei der ein Pulsstrom Ip fließt. In der beschriebenen Ausführungsform ist die hier in einem Schweißzyklus, umfassend eine Grundstromphase und eine Impulsstromphase, konstante Drahtvorschubgeschwindigkeit $V_D$ als Führungsgröße für die Schweißparameter Schweißspannung und Schweißstrom eingestellt, d.h. eine voreingestellte Drahtvorschubgeschwindigkeit erfordert die Einstellung vorgegebener Werte für die Schweißspannung und den Schweißstrom bei dem beschriebenen und beispielhaft erläuterten Impulsstromprozess in der Umsetzung des erfindungsgemäßen Verfahrens.

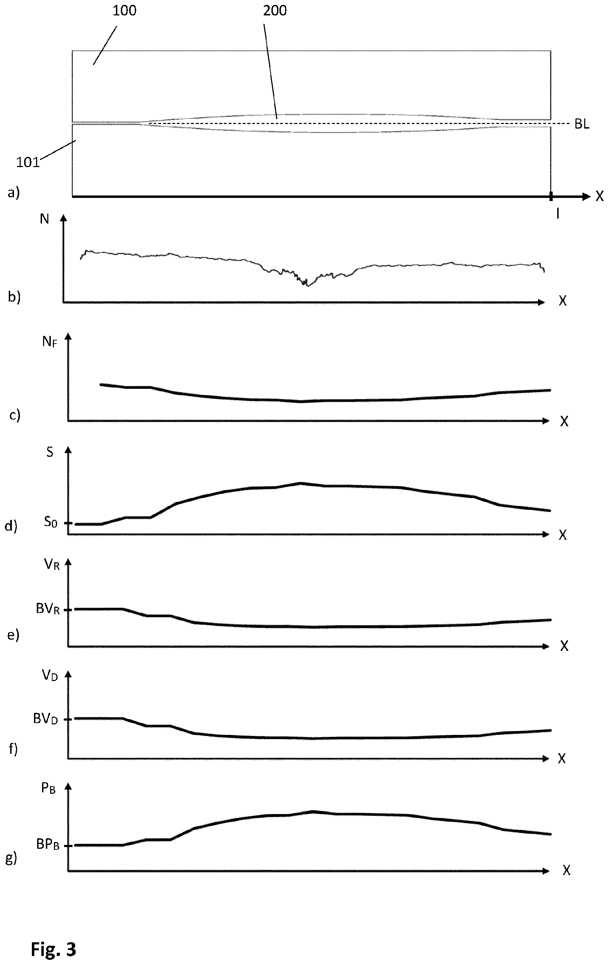

Mit Bezug auf die Figuren 3a - g soll im Folgenden die Umsetzung des erfindungsgemäßen Lichtbogen-Schweißverfahrens mit der Schweißanordnung der Figur 1 erläutert werden. Ausgangspunkt ist die in Figur 3a in einer prinzipiellen Aufsicht dargestellte relative Anordnung zweier Werkstücke 100, 101, die eine sich in Bezug auf die Breite verändernde Fuge bzw. einen sich über die Erstreckung der Werkstücke verändernden Spalt ausbilden. Ausgehend von einem vergleichsweise geringen Spalt auf der linken Seite der Darstellung verbreitert sich dieser in der beschriebenen Anordnung bis etwa zur Mitte der gegenseitigen Anlage der Werkstücke 100, 101, um dann wieder abzufallen, wobei dieser Spalt an der rechten Seite der Darstellung größer ist als die Spaltbreite auf der linken Seite der Figur 3a. Die beiden Werkstücke 100, 101 sollen nun entlang des sich in Bezug auf seine Breite variierenden Spaltes mit dem erfindungsgemäßen Lichtbogen-Schweißverfahren zur Ausbildung einer im Vergleich zum Schweißen mit einem herkömmlichen Schweißverfahren verbesserten Schweißnaht verbunden werden. Dabei soll ferner der mit Bezug auf Figur 2 beschriebene Impulsstrom-Schweißprozess Verwendung finden, bei dem das Nahtverfolgungssignal wie obenstehend beschrieben in Abhängigkeit eines oder mehrerer Schweißstromwerte, und u.U. einer zusätzlichen Filterung, innerhalb der Impulsphase gewonnen wird.

Erfindungsgemäß wird der Schweißbrenner durch den Roboter entlang einer Bahnlinie BL mit überlagerter Pendelbewegung senkrecht zur Bahnlinie zur Ausführung einer vorgegebenen Schweißnaht geführt. Diese Pendelbewegung zur Darstellung der realen Bewegungslinie BE des Brenners (siehe Fig. 1) ist in Figur 3a nicht angegeben. Um bei der Durchführung des Schweißverfahrens Schweißparameter und/oder Bewegungsparameter an eine aktuelle Zustandsspaltbreite, d.h. Ist-Spaltbreite, zur Optimierung der zu erzeugenden Schweißnaht bereitzustellen, werden erfindungsgemäß Nahtverfolgungssignale zum Zeitpunkt einer Pendelelongation von etwa Null, insbesondere von Null, relativ zur Bahnlinie BL ausgewertet, d.h. zunächst erfasst und eventuell nachfolgend verarbeitet, um daraus eine jeweilige Ist- bzw. Zustandsspaltbreite S in Abhängigkeit der Zeit t bzw. in Bezug auf Fig. 3a, in Abhängigkeit des Spaltortes x zu ermitteln. Figur 3b zeigt den Verlauf dieses während der Pendelbewegung des Schweißbrenners mit einer Pendelamplitude, welche der halben Pendelbreite entspricht, aufgenommenen Nahtverfolgungssignals N in Abhängigkeit des Fugenortes x, wobei die Nahtverfolgungssignale N bei einer Pendelelongation von Null aufgenommen wurden. Erkennbar fällt der Wert des Nahtverfolgungssignal ausgehend von dem an der linken Seite vergleichsweise geringen Spalt mit zunehmender Spaltbreite ab und erhöht sich dann mit nach rechts wieder abfallender Spaltbreite.

Um die Güte des Nahtverfolgungssignals zu verbessern, wird in der beschriebenen Ausführungsform das erfasste Nahtverfolgungssignal gefiltert, hier durch Mittelung innerhalb eines Fensters von mehreren Nahtverfolgungssignalabtastungen, der entsprechende Verlauf des wie beschrieben gefilterten Nahtverfolgungssignals $N_F$ zeigt Figur 3c.

In der beschriebenen Ausführungsform kann ein linearer Zusammenhang zwischen der Änderung des gefilterten Nahtverfolgungssignals $N_F$ und einer gesuchten Änderung der Zustandsspaltbreite S angenommen werden. Es hat sich herausgestellt, dass ein solcher linearer Zusammenhang auch bei einer Vielzahl von anderen Schweißprozessen zugrunde gelegt werden kann unter Verwendung eines Nahtverfolgungssignals, auf der Grundlage dessen nach dem obenstehend beschriebenen herkömmlichen Verfahren Seitenkorrektursignale und/oder Höhenkorrektursignale zur Anpassung der Bewegungsbahn des Schweißbrenners erzeugt werden. Diese, u.U. bei dem herkömmlichen Verfahren ermittelten Nahtverfolgungssignalen werden erfindungsgemäß zur Ermittlung einer Zustandsspaltbreite bzw. einer Zustandsspaltbreitenänderung genutzt, auf der Basis dessen zumindest ein Schweißparameter und/oder zumindest ein Bewegungsparameter zur Optimierung der realen Schweißnaht angepasst wird bzw. werden.

Ausgehend von der ermittelten Zustandsspaltbreite S in Abhängigkeit vom Fugenort x werden in der beschriebenen Ausführungsform die Robotergeschwindigkeit $V_R$, d.h. die Geschwindigkeit, mit welcher der Schweißbrenner entlang der Bahnlinie BL bewegt wird, die Drahtvorschubgeschwindigkeit $V_D$, d.h. die Geschwindigkeit, mit welcher der Schweißdraht durch das Kontaktrohr des Brenners bewegt wird und die Pendelbreite $P_B$, d.h. die doppelte Amplitude der Pendelbewegung senkrecht zur Bahnlinie an die ermittelte Spaltbreite angepasst. Diese Anpassung kann je nach Ausführungsform gesteuert oder durch Vorsehen einer entsprechenden Regelschleife geregelt werden.

In einer ersten Ausführungsform des erfindungsgemäßen Schweißverfahrens kann die Anpassung von Bewegungsparametern und Schweißparametern an die ermittelte Zustandsspaltbreite bzw. Zustandspaltbreitenänderung, ausgehend von einem einzelnen Satz von vorgegebenen Basiswerten der Schweißparametern und von vorgegebenen Basiswerten der Bewegungsparametern erfolgen, worauf zunächst eingegangen werden soll. Es hat sich grundsätzlich als zweckmäßig herausgestellt, bei einer positiven Zustandsspaltbreitenänderung, d.h. einer Situation bei welcher der Spalt im Laufe der Erzeugung der Schweißnaht zunimmt, dass der Schweißparameter Drahtvorschubgeschwindigkeit und der Bewegungsparameter Schweißgeschwindigkeit erniedrigt werden sowie der Bewegungsparameter Pendelbreite erhöht wird zur Anpassung der Parameter an die ermittelte Zustandsspaltbreite, um die gewünschten optimierten Schweißergebnisse zu erhalten. Dabei kann vorgesehen sein, dass mit der Änderung der Drahtvorschubgeschwindigkeit zumindest ein weiterer Schweißparameter, wie Schweißstrom, Schweißspannung, Impulsdauer und/oder Impulsfrequenz an die geänderte Drahtvorschubgeschwindigkeit angepasst wird. Diese Anpassung kann insbesondere auch intern realisiert sein. Beispielsweise kann eine Steuereinrichtung der Schweißstromquelle so ausgebildet und eingerichtet sein, dass die Drahtvorschubgeschwindigkeit in der Steuerung bzw. Regelung als Führungsgröße eingerichtet ist und gesteuert bzw. geregelt wird, wobei daran automatisch und intern andere Schweißparameter, insbesondere Schweißstrom, Impulsdauer, Pulsfrequenz und/oder Schweißspannung angepasst werden. In gleicher Weise kann bei einer erfassten Verringerung der ermittelten Zustandsspaltbreite die Pendelbreite verringert und die Robotergeschwindigkeit als auch der Drahtvorschub vergrößert werden zur Optimierung der Schweißdauer unter Beibehaltung eines guten Schweißergebnisses.

Wie dargestellt, geht das erfindungsgemäße Lichtbogen-Schweißverfahren in einer ersten Ausführungsform von einem einzelnen Satz von Basiswerten von Bewegungs-, d.h. Roboterparametern wie Robotergeschwindigkeit $V_R$, Höhensollwert, Seiten-Offset, Pendelbreite und Pendelfrequenz sowie zugehörigen Basiswerten von Schweißparametern, wie Drahtvorschubgeschwindigkeit, Lichtbogenlänge, Werkstoff, Drahtdurchmesser, Schutzgas etc. aus. Für die an die erfasste Spaltbreite bzw. Spaltbreitenänderung anzupassenden Parameterwerte wird erfindungsgemäß jeweils ein Korrekturfaktor KF1 für den Basiswert des jeweiligen Bewegungsparameter bzw. Schweißparameters ermittelt. Der vom Ort x der Schweißnaht abhängige Korrekturfaktor KF1 zur Ermittlung eines erhöhten Wertes eines jeweiligen Parameters kann in einer Ausführungsform berechnet werden durch einen Quotienten, bei welchem der Dividend durch die Summe des vorgegebenen Basiswertes BPB der Pendelbreite und der erfassten positiven Zustandsspaltbreitenänderung $\Delta S$ und der Divisor durch den vorgegebenen Basiswert der Pendelbreite BPB gebildet wird:

$$KF1(x) \quad = \quad (BPB + \Delta S(x))/BPB,$$

wobei die Spaltbreitenänderung $\Delta S(x)$ gegeben ist durch $\Delta S(x) = S(x) - S(x=0)$ und $S(x)$ die Spaltbreite am Ort x sowie $S(x=0)$ die Spaltbreite zu Beginn der Schweißnaht am Ort x=0 angibt.

Der angepasste Parameterwert Pi(x) ergibt sich dann durch Multiplikation des Korrekturfaktors KF1(x) mit dem jeweiligen Basiswert BPi des jeweiligen Bewegungsparameters bzw. Schweißparameters mit dem Parameterindex i:

$$Pi(x) \quad = \quad BPi * KF1(x).$$

Der entsprechende Verlauf der Pendelbreite $P_B$, ausgehend von der Basispendelbreite $BP_B$ zeigt Figur 3g.

Mit der angegebenen Vorschrift erhöht sich insofern die Pendelbreite $P_B$ ausgehend von der Basispendelbreite $BP_B$, wenn sich die Zustandsspaltbreite S ausgehend von der Basisspaltbreite $S_0$ erniedrigt.

In solchen Fällen, in welchen der jeweilige Schweißparameter oder Bewegungsparameter auf eine vergrößerte Spaltbreite zur Anpassung in seinem Wert verkleinert wird, ergibt sich folgende Vorgehensweise. In der beschriebenen Ausführungsform trifft dies für den Schweißparameter Drahtvorschubgeschwindigkeit und den Bewegungsparameter Robotergeschwindigkeit zu. Für die an die erfasste Spaltbreite bzw. Spaltbreitenänderung anzupassenden Parameterwerte wird erfindungsgemäß wiederum jeweils ein Korrekturfaktor KF2 für den Basiswert des jeweiligen Bewegungsparameter bzw. Schweißparameters ermittelt. Der Korrekturfaktor KF2 zur Ermittlung eines erniedrigten Wertes eines jeweiligen Parameters kann berechnet werden durch einen Quotienten, bei welchem der Dividend durch den vorgegebenen Basiswert der Pendelbreite BPB gebildet wird und der Divisor durch die Summe des vorgegebenen Basiswertes BPB der Pendelbreite und der erfassten positiven Zustandsspaltbreitenänderung $\Delta S$ gebildet wird:

$$KF2(x) \quad = \quad BPB/(BPB + \Delta S(x))$$

wobei wiederum $\Delta S(x) = S(x) - S(x=0)$ gilt.

Der angepasste Parameterwert Pi(x) ergibt sich dann durch Multiplikation des Korrekturfaktors KF2(x) mit dem jeweiligen Basiswert BPi des jeweiligen Bewegungsparameters bzw. Schweißparameters:

$$Pi(x) \quad = \quad BPi * KF2(x)$$

Wie aus dem Vorstehenden ersichtlich, gilt hier KF2(x) = 1/KF1(x). In der beschriebenen Weise wurden die in den Figuren 3e) und 3f) angegebenen Verläufe von Robotergeschwindigkeit $V_R$ und Drahtvorschubgeschwindigkeit $V_D$ an die erfasste Spaltbreitenänderung ΔS(x) angepasst zur Erzielung eines verbesserten Schweißergebnisses.

In solchen Schweißsituationen, bei welchen die Spaltbreite während der Durchführung des Schweißverfahrens vergleichsweise große Änderungen während des gesamten Schweißvorgangs unterworfen ist, kann eine besondere Ausführungsform des erfindungsgemäßen Verfahrens durchgeführt werden, bei welcher von einer Mehrzahl von Datensätzen ausgegangen wird, die jeweils einen Basiswert der Schweiß- bzw. Bewegungsparameter des jeweiligen Satzes umfassen, wobei jeder der Datensätze einer jeweiligen Spaltbreite zugeordnet ist. Wird nun bei dem erfindungsgemäßem Lichtbogen-Schweißverfahren eine Zustandsspaltbreite erfasst, die zwischen den zugeordneten Spaltbreiten zweier derartiger Datensätze liegt, kann erfindungsgemäß unter Berücksichtigung der jeweiligen Basiswerte der Datensätze eine Anpassung der Schweiß- bzw. Bewegungsparameter durchgeführt werden.

Tabelle 1 zeigt jeweils im Ausschnitt bespielhaft zwei derartiger Datensätze, wobei der erste Datensatz einer Spaltbreite von 0 mm und der zweite Datensatz einer Spaltbreite von 3 mm zugeordnet ist.

| Parameter | Erster Datensatz für 0 mm Spalt | Zweiter Datensatz für 3 mm Spalt | Korrekturfaktor KFi |
|---|---|---|---|
| Schweißgeschwindigkeit | 50 cm/min. | 10 cm/min. | -13,33 cm/(min mm) |
| Höhen-Sollwert | 500 | 600 | 33,33 1/mm |
| Pendelbreite | 1,5 mm | 3,2 mm | 0,567 |
| Pendel frequenz | 2,84 Hz | 3,12 Hz | 0,093 Hz/mm |
| Drahtvorschubgeschwindigkeit | 11,00 m/min. | 3,20 m/min. | -2,6 m/min mm |
| Lichtbogenlänge | 3 % | 9 % | 2 % 1/mm |
| ... | ... | ... | ... |

Im Folgenden wird angenommen, dass das erfindungsgemäße Schweißverfahren bei einer erfassten Spaltbreite von 0 mm startet und insofern die Basiswerte des ersten Datensatzes zum Einstellen bzw. Regeln der Schweißparameter und Bewegungsparameter Anwendung finden. Wird im Laufe der Verschweißung der Werkstücke eine positive Zustandsspaltbreitenänderung wie obenstehend beschrieben unter Auswertung von Nahtverfolgungssignalen erfasst, kann auch in dieser Ausführungsform vorgesehen sein, dass der Schweißparameter Drahtvorschubgeschwindigkeit und der Bewegungsparameter Schweißgeschwindigkeit erniedrigt werden sowie der Bewegungsparameter Pendelbreite erhöht wird als Anpassung auf die erfasste Spaltvergrößerung. Die Adaption der Parameter erfolgt in dieser Ausführungsform nun in Abhängigkeit der in der obigen Tabelle angegebenen Basiswerte der einzelnen Parameter zu den beiden Datensätzen sowie in Abhängigkeit der Unterschiede in den Spaltbreiten, die den jeweiligen Datensätzen zugeordnet sind. Ein angepasster neuer Parameterwert Pi(x) ergibt sich dann wie folgt:

$$Pi(x) = BjPi + (KFi * S(x)),$$

wobei der Index j den Datensatz und der Index i den jeweiligen Bewegungs- bzw. Schweißparameter bezeichnet, KFi einen Korrekturfaktor für den jeweiligen Parameter mit dem Index i und S(x) die Spaltbreite am Ort x angibt.

Der Korrekturfaktor KFi des jeweiligen Parameters ergibt sich zu

$$KFi = (B_{j+1}P_i - B_jP_i)/\Delta s,$$

wobei der Index j den Datensatz und der Index i den jeweiligen Bewegungs- bzw. Schweißparameter bezeichnet und $\Delta s = s_{j+1} - s_j$ die Differenz der zugeordneten Spaltbreiten von in Bezug auf die Spaltbreite "benachbarten" Datensätzen angibt.

Beispielsweise berechnet sich bei einer erkannten Zustandsspaltbreite S(X) von 1,5 mm nach dem erfindungsgemäßen Verfahren ein angepasster Wert für die Drahtvorschubgeschwindigkeit auf der Grundlage der obigen Tabelle und dem angegebenen Berechnungsverfahren zu

$$P_{Drahtvorschubgeschwindigkeit} = 11,00 \text{ m/min} + (3,20 \text{ m/min} - 11,00 \text{ m/min}) / (3 \text{ mm} - 0 \text{ mm}) \times 1,5 \text{ mm}) = 7,1 \text{ m/min}$$

**Bezugszeichenliste**

| | |
|---|---|
| 1 | Schweißanordnung |
| 10 | Schweißstromquelle |
| 12 | Schweißkabel |
| 20 | Roboter |
| 25 | Drahtantriebseinheit |
| 28 | Drahtspeicher |
| 30 | Schweißbrenner |
| 40 | Zentrale Steuereinrichtung |
| 41 | Daten- und Steuerleitung |
| 42 100,101 | Daten- und Steuerleitung Werkstück |
| 200 | Spalt |
| BE | Bewegungslinie |
| BL | Bahnlinie |
| $BP_B$ | Basiswert Pendelbreite |
| BjPi | Basiswert des Datensatzes j des Parameters i |
| $BV_D$ | Basiswert Drahtvorschubgeschwindigkeit |
| $BV_R$ | Basiswert Robotergeschwindigkeit |
| i | Parameterindex |
| j | Datensatzindex |
| KFi | Korrekturfaktor des jeweiligen Parameters i |
| l | Fugenlänge |
| N | Nahtverfolgungssignal |
| $N_F$ | gefiltertes Nahtverfolgungssignal |
| P | Pendelbewegung |
| $P_B$ | Pendelbreite |
| S | Spaltbreite, Zustandsspaltbreite |
| $\Delta S$ | Spaltbreitenänderung |
| $S_0$ | Basisspaltbreite |
| $S_N$ | Schweißnaht |
| t | Zeit |
| $T_G$ | Zeitintervall |
| $T_P$ | Zeitintervall |
| Pi | Parameterwert |
| KFi | Korrekturfaktor des jeweiligen Parameters i |
| x | Spaltortkoordinate |

**Patentansprüche**

1. Lichtbogen-Schweißverfahren, insbesondere Lichtbogen-schweißverfahren mit abschmelzender Elektrode, zum Verbinden zumindest zweier Werkstücke (100, 101), bei welchem ein Roboter (20) einen Schweißbrenner (30) entlang einer Bahnlinie (BL) mit überlagerter Pendelbewegung senkrecht zur Bahnlinie zur Ausführung einer vorgegebenen Schweißnaht (SN) führt und in Abhängigkeit von zumindest einer zeitlich sich ändernden Zustandsgröße des Schweißlichtbogens wie Schweißstrom oder Schweißspannung während der Bewegung des Schweißbrenners Nahtverfolgungssignale (N) erzeugt werden, aus welchen zur Nachführung der Position des Schweißbrenners (30) in Bezug auf die vorgegebene Schweißnaht Seitenkorrektursignale und/oder Höhenkorrektursignale erzeugt werden, mit welchen die Bewegung des Schweißbrenners (30) zur Erzeugung der Schweißnaht (SN) angepasst wird, wobei der Schweißbrenner einen Schweißprozess unter Einstellung einer Mehrzahl von Schweißparametern wie Drahtvorschubgeschwindigkeit, Schweißstrom, Schweißspannung und/oder Lichtbogenlänge ausführt, **dadurch ge - kennzeichnet, dass** Nahtverfolgungssignale (N) zum Zeitpunkt einer Pendelelongation zur Bahnlinie (BL) von etwa Null ausgewertet werden zur Ermittlung einer Zustandsspaltbreite (S) bzw. Zustandsspaltbreitenänderung (ΔS) zwischen den zu verschweißenden Werkstücken (100, 101), wobei zumindest einer der Schweißparameter Drahtvorschubgeschwindigkeit, Lichtbogenlänge, Schweißspannung und Schweißstrom in Abhängigkeit der ermittelten Zustandsspaltbreite (S) angepasst wird, und das Schweißverfahren mit dem angepassten Wert des Schweißparameters weitergeführt wird.

2.  Schweißverfahren nach Anspruch 1, **dadurch ge - kennzeichnet, dass** in Abhängigkeit der Nahtverfolgungssignale (N) zumindest ein Bewegungsparameter des Schweißbrenners (30) bzw. des Roboters (20) aus den Bewegungsparametern Schweißgeschwindigkeit, Höhensollwert, Pendelbreite und Pendelfrequenz zur Erzeugung der Schweißnaht (SN) angepasst wird, und das Schweißverfahren mit dem angepassten Wert des Bewegungsparameters zur Bewegung des Schweißbrenners durch den Roboter weitergeführt wird.

3.  Schweißverfahren nach Anspruch 1 oder 2, **dadurch gekennzeichnet, dass** Nahtverfolgungssignale (N) bei einem zumindest phasenweise spannungsgeregelten Schweißprozess in Abhängigkeit eines in der spannungsgeregelten Schweißphase erfassten Schweißstromes und/oder Nahtverfolgungssignale bei einem zumindest phasenweise stromgeregelten Schweißprozess in Abhängigkeit einer in der stromgeregelten Schweißphase erfassten Schweißspannung ermittelt werden.

4.  Schweißverfahren nach Anspruch 1, 2 oder 3, **dadurch gekennzeichnet, dass** die Auswertung der Nahtverfolgungssignale (N) zum Zeitpunkt einer Pendelelongation zur Bahnlinie (BL) von etwa Null eine Median- oder Mittelwertbildung einer (vorgegebenen) Anzahl von zeitlich aufeinanderfolgenden Nahtverfolgungssignalen zum Zeitpunkt einer Pendelelongation zur Bahnlinie von etwa Null umfasst.

5.  Schweißverfahren nach einem der Ansprüche 1 bis 4, **dadurch gekennzeichnet, dass** eine Änderung der Zustandsspaltbreite (S) über eine Strecke (X) der Bahnlinie (BL) erfasst und bei Überschreiten einer vorgegebenen Schwelle der Änderungsrate eine Änderung zumindest eines Schweißparameters und/oder zumindest eines Bewegungsparameters gesteuert oder geregelt wird.

6.  Schweißverfahren nach einem der Ansprüche 1 bis 5, **dadurch gekennzeichnet, dass** bei der Durchführung des Schweißverfahrens zumindest einer der Schweißparameter Drahtvorschubgeschwindigkeit, Lichtbogenlänge, Schweißspannung und/oder Schweißstrom, kontinuierlich an die ermittelte Zustandsspaltbreite (S) bzw. Zustandsspaltbreitenänderung zwischen den Werkstücken (100, 101) angepasst wird.

7.  Schweißverfahren nach einem der Ansprüche 1 bis 6, **dadurch gekennzeichnet, dass** nach dem Erfassen einer positiven Zustandsspaltbreitenänderung (ΔS) der Schweißparameter Drahtvorschubgeschwindigkeit und der Bewegungsparameter Schweißgeschwindigkeit erniedrigt und der Bewegungsparameter Pendelbreite erhöht werden, wobei vorzugsweise zur Ermittlung eines erhöhten Wertes eines jeweiligen Bewegungsparameters bzw. eines jeweiligen Schweißparameters ein vorgegebener jeweiliger Basiswert des Bewegungsparameters bzw. des Schweißparameters multipliziert wird mit einem Quotienten, bei welchem der Dividend durch die Summe eines vorgegebenen Basiswertes der Pendelbreite (BP$_B$) und der erfassten positiven Zustandsspaltbreitenänderung (ΔS) und der Divisor durch den vorgegebenen Basiswert der Pendelbreite (BP$_B$) gebildet wird.

8.  Schweißverfahren nach einem der Ansprüche 7, **dadurch gekennzeichnet, dass** zur Ermittlung eines erniedrigten Wertes eines jeweiligen Bewegungsparameters bzw. eines jeweiligen Schweißparameters ein vorgegebener jeweiliger Basiswert des Bewegungsparameters bzw. des Schweißparameters multipliziert wird mit einem Quotienten, bei welchem der Dividend durch einen vorgegebenen Basiswert der Pendelbreite (BP$_B$) und der Divisor durch die Summe des vorgegebenen Basiswertes der Pendelbreite (BP$_B$) und der erfassten positiven Zustandsspaltbreitenänderung (ΔS) gebildet wird.

9.  Schweißverfahren nach einem der Ansprüche 1 bis 8, **dadurch gekennzeichnet, dass** nach dem Erfassen einer negativen Zustandsspaltbreitenänderung (ΔS) der Schweißparameter Drahtvorschubgeschwindigkeit und der Bewegungsparameter Schweißgeschwindigkeit erhöht und der Bewegungsparameter Pendelbreite erniedrigt werden.

10. Schweißverfahren nach einem Ansprüche 1 bis 9, **dadurch gekennzeichnet, dass** bei der Durchführung des Schweißverfahrens zumindest ein Bewegungsparameter des Schweißbrenners (30) bzw. Roboters (20), insbesondere die Schweißgeschwindigkeit, der Höhensollwert, der Seitenoffset, die Pendelbreite und/oder die Pendelfrequenz kontinuierlich an die ermittelte Zustandsspaltbreite (S) bzw. Zustandsspaltbreitenänderung (ΔS) zwischen den Werkstücken (100, 101) angepasst wird.

11. Schweißverfahren nach einem der Ansprüche 1 bis 10, **dadurch gekennzeichnet, dass** eine Anpassung des zumindest einen Schweißparameters in Abhängigkeit der ermittelten Zustandsspaltbreite (S) bzw. Zustandsspaltbreitenänderung (ΔS) und eine Höhenkorrektur der Bahnlinie zueinander aufeinanderfolgend und fortlaufend durchgeführt wird.

12. Schweißverfahren nach einem der Ansprüche 1 bis 11, **dadurch gekennzeichnet, dass** zumindest zwei Sätze von Basiswerten von Schweißparametern mit zugeordneten Bewegungsparametern vorgegeben werden, wobei der erste Satz von Basiswerten von Parametern einer ersten Spaltbreite und der zweite Satz von Basiswerten von Parametern einer zweiten Spaltbreite zugeordnet ist, und bei ermittelten Zwischenwerten von Zustandsspaltbreiten (S) zwischen der ersten Spaltbreite und der zweiten Spaltbreite jeweilige Korrekturwerte für zumindest einen Bewegungsparameter und/oder für zumindest einen Schweißparameter in Abhängigkeit einer Differenzbildung des Basiswerts des zweiten Satzes und des Basiswerts des ersten Satzes des jeweiligen Parameters, in Abhängigkeit einer Differenzbildung der Spaltbreite des ersten Satzes von der Spaltbreite des zweiten Satzes sowie in Abhängigkeit der ermittelten Zustandsspaltbreite (S) ermittelt wird bzw. werden.

13. Schweißverfahren nach Anspruch 12, **dadurch ge - kennzeichnet, dass** zur Berechnung eines Korrekturfaktors (KFi) des jeweiligen Parameters ein Quotient aus der Differenz des Basiswerts des ersten Satzes und des Basiswerts des zweiten Satzes des jeweiligen Parameters und der Differenz der Spaltbreiten beider Sätze gebildet wird, wobei eine Berechnung des Korrekturwertes des jeweiligen Parameters eine Multiplikation des Korrekturfaktors des Parameters und der ermittelten Zustandsspaltbreite umfasst, wobei vorzugsweise die Anpassung des jeweiligen Parameters durch Addition des Basiswertes des Parameters des ersten Satzes und dessen Korrekturwert ermittelt und das Schweißverfahren mit dem angepassten Wert des Parameters weitergeführt wird.

14. Schweißverfahren nach einem der Ansprüche 1 bis 13, **dadurch gekennzeichnet, dass** die Nahtverfolgungssignale (N) zum Zeitpunkt einer maximalen Pendelelongation entsprechend der Pendelamplitude zur Bewegungslinie erfasst werden zur Ermittlung von Seitenkorrektursignalen und/oder Höhenkorrektursignalen.

15. Schweißanordnung (1) zur Ausführung eines Lichtbogen-Schweißverfahren, insbesondere eines Lichtbogenschweißverfahrens mit abschmelzender Elektrode, zum Verbinden zumindest zweier Werkstücke (100, 101), umfassend ein Schweißsystem mit einer Schweißquelle (10) und einem von einer Schweißsteuerung gesteuerten Schweißbrenner (30), sowie einem mittels einer Robotersteuerung gesteuerten Roboter (20), der den Schweißbrenner (30) entlang einer Bahnlinie (BL) mit überlagerter Pendelbewegung senkrecht zur Bahnlinie zur Ausführung einer vorgegebenen Schweißnaht (SN) führt, wobei die Steuerungen eingerichtet und ausgebildet sind, in Abhängigkeit von zumindest einer zeitlich sich ändernden Zustandsgröße des Schweißlichtbogens wie Schweißstrom oder Schweißspannung während der Bewegung des Schweißbrenners (30) Nahtverfolgungssignale (N) zu erzeugen und daraus zur Nachführung der Position des Schweißbrenners (30) in Bezug auf die vorgegebene Schweißnaht (SN) Seitenkorrektursignale und/oder Höhenkorrektursignale zu ermitteln, mit welchen die Bewegungslinie des Schweißbrenners zur Erzeugung der Schweißnaht (SN) angepasst wird, wobei der Schweißbrenner (30) einen Schweißprozess mit vorgegebenen Schweißparametern wie Drahtvorschubgeschwindigkeit, Schweißstrom, Schweißspannung und/oder Lichtbogenlänge ausführt, **dadurch gekennzeichnet, dass** die Schweißanordnung (1) ausgebildet und eingerichtet ist, Nahtverfolgungssignale (N) zum Zeitpunkt einer Pendelelongation zur Bewegungslinie (BL) von Null zu erfassen zur Ermittlung einer Zustandsspaltbreite (S) bzw. einer Zustandsspaltbreitenänderung (ΔS) zwischen den zu verschweißenden Werkstücken (100, 101) und zumindest einer der Schweißparameter Drahtvorschubgeschwindigkeit, Lichtbogenlänge, Schweißspannung und Schweißstrom in Abhängigkeit der ermittelten Zustandsspaltbreite anzupassen, und das Schweißverfahren mit dem angepassten Wert des Schweißparameters weiterzuführen.

**Fig. 1**

Fig. 2

**Fig. 3**

**Europäisches Patentamt**
**European Patent Office**
**Office européen des brevets**

# EUROPÄISCHER RECHERCHENBERICHT

**Nummer der Anmeldung**

**EP 21 21 1859**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2020 049542 A (KOMATSU MFG CO LTD) 2. April 2020 (2020-04-02) | 1-3,5,6, 9-11,14, 15 | INV. B23K9/02 B23K9/095 |
| A | * Zusammenfassung * * Absätze [0010], [0015] – [0017], [0022], [0027], [0029], [0039] – [0050], [0058] – [0060], [0067] – [0070], [0088] – [0104], [0109], [0110] * * Absätze [0113], [0114] * * Abbildungen 1–12 * ————— | 7,8,12, 13 | B23K9/12 B23K9/127 B23K9/173 |
| X | JP S63 192562 A (HITACHI LTD) 9. August 1988 (1988-08-09) | 1-3,5,6, 9-11,14, 15 | |
| A | * Zusammenfassung * * Abbildungen 1–7 * ————— | 7,8,12, 13 | |
| X | JP S60 210357 A (HITACHI SHIPBUILDING ENG CO) 22. Oktober 1985 (1985-10-22) | 1-6, 9-11,14, 15 | |
| A | * das ganze Dokument * ————— | 7,8,12, 13 | RECHERCHIERTE SACHGEBIETE (IPC) B23K G05B |
| A | JP H07 328769 A (SHIN MEIWA IND CO LTD) 19. Dezember 1995 (1995-12-19) * Zusammenfassung * * Abbildungen 1–3 * ————— | 1-15 | |

Der vorliegende Recherchenbericht wurde für alle Patentansprüche erstellt

| Recherchenort | Abschlußdatum der Recherche | Prüfer |
|---|---|---|
| Den Haag | 13. Mai 2022 | Stocker, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 21 1859

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2022

| Im Recherchenbericht angeführtes Patentdokument | Datum der Veröffentlichung | Mitglied(er) der Patentfamilie | Datum der Veröffentlichung |
|---|---|---|---|
| JP 2020049542 A | 02-04-2020 | KEINE | |
| JP S63192562 A | 09-08-1988 | KEINE | |
| JP S60210357 A | 22-10-1985 | KEINE | |
| JP H07328769 A | 19-12-1995 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4785155 A
- EP 1268110 B2
- EP 0512583 B1